# EUROPÄISCHE PATENTANMELDUNG

(11) **EP 4 124 223 A2**
(43) Veröffentlichungstag der Anmeldung: **01.02.2023**
(21) Anmeldenummer: 22179736.8
(22) Anmeldetag: 17.06.2022
(51) Int. Cl.: A01B 71/02, A01B 63/00

(54) **HALTERUNG EINER PFLANZENBEARBEITUNGSEINRICHTUNG**

(30) Priorität: 12.07.2021 DE 102021117978
(71) Anmelder: ERO GmbH, 55469 Simmern (DE)
(72) Erfinder: KRAFF, Benedikt, 54518 Sehlem (DE); BENZ, Markus, 55131 Mainz (DE)
(74) Vertreter: Cabinet Nuss

(57) **Zusammenfassung**

Halterung einer an einem landwirtschaftlichen Fahrzeug befestigten Pflanzenbearbeitungseinrichtung, vorzugsweise einer Blattschneideeinrichtung für Reihenkulturen, wobei die Pflanzenbearbeitungseinrichtung mittels an der Halterung vorgesehenen Verstellvorrichtungen relativ zur Halterung, zum Fahrzeug und zur Pflanze verstellbar ausgebildet ist, wobei mindestens eine der Verstellvorrichtungen einen an der Halterung angelenkten Linear-Aktor mit einem linearem Verstellweg aufweist, wobei der Linear-Aktor mit weiteren Lenkern, Koppelgliedern oder Führungen ein Koppelgetriebe bildet, welches so mit der Halterung verbunden ist, dass eine durch den Aktor bewirkte Linearbewegung über mindestens Teile des Verstellweges in eine Drehung oder Kippung der Pflanzenbearbeitungseinrichtung (10, 11) oder in eine betragsmäßige Veränderung des linearen Verstellweges der Pflanzenbearbeitungseinrichtung überführbar ist.

## Beschreibung

Die Erfindung betrifft eine Halterung für eine an einem landwirtschaftlichen Fahrzeug befestigte Pflanzenbearbeitungseinrichtung, vorzugsweise einer Blattschneideeinrichtung für Reihenkulturen, wobei die Pflanzenbearbeitungseinrichtung mittels an der Halterung vorgesehenen Verstellvorrichtungen relativ zur Halterung und dementsprechend relativ zu der zu bearbeitenden Pflanze verstellbar ausgebildet ist, wobei mindestens eine der Verstellvorrichtungen einen an der Halterung angelenkten Linear-Aktor mit einem linearem Verstellweg aufweist

Insbesondere für die Kultivierung und Bearbeitung von Pflanzen in Reihenkulturen, wie etwa beim Weinanbau, beim Obst-, Hopfen- und Gemüseanbau, werden zur effizienten Bewirtschaftung Pflanzenbearbeitungseinrichtungen benötigt, die üblicherweise an einem landwirtschaftlichen Fahrzeug befestigt sind.

Solche Pflanzenbearbeitungseinrichtungen, wie zum Beispiel Laubschneider, Spritz- oder Sprühgeräte und Entlaubungsgeräte, werden oft als Front-, Heck- oder Seitenanbaugeräte für Traktoren ausgebildet, sind üblicherweise in einem Rahmen oder in einer Halterung des Anbaugerätes angeordnet und können in Bezug auf die zu bearbeitende Pflanze in ihrer Zustellung mit verschiedenen Aktoren variiert werden. Dies gilt ebenso mit Bezug auf den Rahmen oder die Halterung. Hier ist besonders darauf zu achten, dass die Traktoren mit den Anbaugeräten auch normale Verkehrswege oder Zuwegungen benutzen. Hierzu müssen die Rahmen oder Halterungen auch verkleinert oder verschwenkt werden können, um beim Transport eventuelle Durchfahrtsbreiten oder Wegbreiten nicht zu überschreiten.

Die Pflanzenbearbeitungseinrichtungen müssen also in ihrer horizontalen und vertikalen Zustellung und Position als auch in ihrer Neigung variierbar sein, um allen Anforderungen bei der Pflanzenbearbeitung und bei der Benutzung von Verkehrswegen gerecht zu werden.

Die DE 10 2004 016 656 A1 offenbart zur Verstellung von Anbauten an einem landwirtschaftlichen Fahrzeug eine Steuerung, bei der eine Pflanzenbearbeitungseinrichtung komfortabel über Tasten gesteuert wird, um von einer definierten Transportstellung in mindestens eine vorgegebene Arbeitsstellung gefahren werden kann. Im Detail sind hier jedoch keine Vorgaben zu finden, die dem Fachmann die konstruktive Ausbildung einer Verstellvorrichtung innerhalb einer Halterung oder eines Rahmens für eine Pflanzenbearbeitungseinrichtung verdeutlichen könnte.

Die konstruktive Ausbildung einer solchen Verstellvorrichtung für eine in einer Halterung an einem landwirtschaftlichen Fahrzeug befestigten Pflanzenbearbeitungseinrichtung ist aber von gravierender Bedeutung. So ist es erforderlich, die Abmessungen und das Gewicht solcher Verstellvorrichtungen zu minimieren und dafür zu sorgen, dass der Energiebedarf möglichst gering bleibt.

Das hat zur Folge, dass man die Anzahl der Aktoren, wie etwa Hydraulikzylinder, Elektromotoren, oder Linearantriebe möglichst klein halten möchte. Bei der Vielzahl der Bewegungsvorgänge, die für moderne landwirtschaftliche Geräte verlangt werden und bei der gleichzeitigen umfassenden Anforderung an Bearbeitungskomfort, an universelle Verwendbarkeit für die Pflanzenbearbeitung und an eine problemlose Nutzung öffentlicher Verkehrswege, ergibt sich hier oft ein erheblicher Zielkonflikt.

Die Aufgabe der vorliegenden Erfindung bestand demnach in der Bereitstellung einer Halterung für eine an einem landwirtschaftlichen Fahrzeug befestigten Pflanzenbearbeitungseinrichtung, bei der auch komplizierte Bewegungsabläufe mit möglichst wenig Aktoren und damit geringem Energieverbrauch durchgeführt werden können. Ebenso war es Aufgabe der Erfindung, das Gewicht landwirtschaftlicher Fahrzeuge, die solche Halterungen tragen, möglichst zu verringern, um eine unerwünschte Bodenverdichtung zu vermeiden. Weiterhin bestand die Aufgabe darin, die Abmessungen im Transportzustand zu verringern. Letztlich war auch die Verringerung des Gesamtgewichts der Halterung als solcher wichtig, da oft mehrere Halterungen an ein und demselben Fahrzeug angebaut werden müssen und daher ein häufiger Wechselvorgang nötig ist.

Gelöst wird diese Aufgabe durch die Merkmale des Hauptanspruchs. Weitere vorteilhafte Ausbildungen sind in den Unteransprüchen offenbart. Ebenfalls ist ein landwirtschaftliches Fahrzeug mit einer erfindungsgemäßen Halterung offenbart.

Dabei weist mindestens eine der Verstellvorrichtungen einen an der Halterung angelenkten Linear-Aktor mit einem linearem Verstellweg auf. Der Linear-Aktor bildet mit weiteren Lenkern, Koppelgliedern oder Führungen ein Koppelgetriebe, welches so mit der Halterung verbunden ist, dass eine durch den Aktor bewirkte Linearbewegung über mindestens Teile des Verstellweges in eine Drehung oder Kippung der Pflanzenbearbeitungseinrichtung oder in eine betragsmäßige Veränderung des linearen Verstellweges der Pflanzenbearbeitungseinrichtung überführbar ist.

Bei der betragsmäßigen Veränderung des linearen Verstellweges ist natürlich eine Vergrößerung von besonderer Bedeutung, da dadurch erhebliche Veränderungen zum Beispiel in der Breite der Halterung möglich sind. So erlaubt etwa eine in der Breite im Transportzustand am Fahrzeug sehr wenig Raum einnehmende Halterung die Nutzung von öffentlichen Verkehrswegen und schmalen Feldwegen und kann im Arbeitszustand mit nur einem Linear-Aktor/linearem Antriebselement auf erhebliche Arbeitsbreiten ausgefahren werden.

Die Erfindung setzt dabei bei dem Gedanken an, dass mithilfe eines Koppelgetriebes, welches lediglich durch einen Linear-Aktor angetrieben wird, nicht nur eine Linearbewegung, sondern eine Vielzahl von auch komplizierten Bewegungsabläufen durchführbar werden. Erfindungsgemäß bildet der Linear-Aktor dabei mit weiteren Lenkern, Koppelgliedern und/oder Führungen ein Koppelgetriebe, welches über seine Lenker, Koppelglieder und Führungen so mit mehreren Anlenkungspunkten in oder an der Halterung verbunden ist, dass eine durch den Aktor bewirkte Linearbewegung über mindestens Teile des linearen Verstellweges in eine Drehung oder Kippung der Pflanzenbearbeitungseinrichtung oder in eine betragsmäßige Veränderung des Verstellweges umgeformt werden kann.

Eine vorteilhafte Ausbildung einer solchen Halterung geht dahin, dass an der Halterung eine Verstellvorrichtung vorgesehen ist, mit der zunächst eine lineare Verschiebung der Bearbeitungseinrichtung bis zu einem gewissen Punkt erfolgt, wonach sich eine Schwenkbewegung der Bearbeitungseinrichtung anschließt.

Diese Ausbildung besteht darin, dass die Pflanzenbearbeitungseinrichtung an einem Koppellenker befestigt ist, welcher schwenkbar an einem ersten, nämlich dem bearbeitungsseitigen Ende einer Führungsstange gelagert ist. Damit lässt sich die Pflanzenbearbeitungseinrichtung in Bezug auf die Führungsstange schwenken. Die Führungsstange selbst ist in einer an der Halterung befestigten Führungshülse der Verstelleinrichtung relativ zur Halterung linear geführt bewegbar, wodurch sich die Pflanzenbearbeitungseinrichtung in linearer Richtung bewegen lässt. Die Besonderheit dieser Ausbildung besteht nun darin, dass die lineare Bewegung und die Schwenkbewegung der Pflanzenbearbeitungseinrichtung durch ein Koppelglied voneinander getrennt werden können und sukzessive nacheinander durchführbar sind. Die Führungsstange und die Führungshülse bilden dazu eine durch einen Anschlag in einer Endstellung begrenzbare Linearführung für den Koppellenker und die Pflanzenbearbeitungseinrichtung.

Der Linear-Aktor ist bei dieser Ausführung der Erfindung an seinem ersten Ende schwenkbar an der Führungshülse gelagert und an seinem gegenüberliegenden zweiten Ende an einem ersten Anlenkpunkt des Koppellenkers so angelenkt, dass durch die Linearbewegung des Linear-Aktors sowohl die Führungsstange linear bewegbar als auch die Pflanzenbearbeitungseinrichtung in Bezug auf die Führungsstange schwenkbar ist.

Dabei ist ein als Teleskopfeder ausgebildetes Koppelelement einerseits an der Führungsstange und andererseits an einem zweiten Anlenkpunkt des Koppellenkers so angelenkt, dass die Teleskopfeder mit der Führungsstange linear verschiebbar ist, während die Federkraft der Teleskopfeder der durch den Linear-Aktor ausgeübten Bewegungskraft entgegenwirkt und soweit kompensiert, dass eine Schwenkbewegung des Koppelgliedes und der damit verbundenen Pflanzenbearbeitungseinrichtung während der Linearbewegung der Führungsstange bis zum Erreichen ihrer durch den Anschlag bestimmten Endstellung verhindert ist. Üblicherweise werden Gasdruckfedern als Teleskopfedern hier verwendet.

Vorteilhafterweise sind die Dreh- oder Schwenkachsen aller Anlenkpunkte des Koppellenkers parallel zueinander angeordnet und die Pflanzenbearbeitungseinrichtung ist um eine quer zu der Linearbewegung der Führungsstange liegende Achse schwenkbar.

Die Halterung weist damit eine Höhenverstellung auf, welche mittels eines einzigen Linear-Aktors, beispielsweise eines Hydraulikzylinders, zwischen einem oberen Endpunkt und einem unteren Endpunkt linear verfahren wird. Beim Ausfahren des Hydraulikzylinders über den unteren Endpunkt hinaus, d. h. nach Erreichen des Anschlags für den linearen Teil der durch die Führungseinrichtung bestimmten Bewegung hinaus, wirkt dann die gesamte Kraft des Hydraulikzylinders auf die Teleskopfeder/Gasdruckfeder. Dadurch wird die am Koppellenker befestigte Pflanzenbearbeitungseinrichtung unter Überwindung der Federkraft der Gasdruckfeder um eine quer zu der durch die Führungseinrichtung vorgegebene Linearbewegung liegende Achse geschwenkt.

Während der linearen Höhenverstellung gewährleistet eine Gasdruckfeder also eine nicht verschwenkte, z.B. horizontale Lage der Pflanzenbearbeitungsvorrichtung. Ihr Schwenken erfolgt nach der linearen Verstellung über das Gelenk des Koppellenkers, mit welchem dieser in dem bearbeitungsseitigen Ende einer Führungsstange gelagert ist.

Ein Vorteil hier ist, dass die Pflanzenbearbeitungsvorrichtung, beispielsweise ein Schneidbalken mit mehreren rotierenden Messern, zuerst nach unten gefahren wird, bevor sie geschwenkt wird, etwa in eine senkrechte Stellung zum Schneiden der Seitenbereiche von Pflanzen. Eine Kollision des in eine senkrechte Stellung schwenkenden Schneidbalkens mit naheliegenden Vorrichtungs-, Rahmen- oder Halterungsteilen wird damit vermieden. Außerdem wird nur ein einziger Hydraulikzylinder für beide Aktionen benötigt, und es muss nicht manuell geschwenkt werden. Die Gasdruckfeder ist passiv. Das Hochschwenken der Schneidbalken erlaubt eine Breite im Transportmodus/Straßenfahrbetrieb, die noch StVO-konform ist (STVO= in der Bundesrepublik Deutschland gültige Straßenverkehrsordnung).

Eine weitere vorteilhafte Ausbildung der Erfindung besteht darin, dass an der Halterung eine Verstellvorrichtung derart vorgesehen ist, dass die Pflanzenbearbeitungseinrichtung an einer durch einen Linear-Aktor teleskopierbaren Führungsstange befestigt ist, die in einer ersten Führungshülse der Verstellvorrichtung linear geführt ist. Diese erste Führungshülse ist wiederum in einer an der Halterung befestigten zweiten Führungshülse der Verstellvorrichtung angeordnet und damit relativ zur zweiten Führungshülse, bzw. Halterung linear geführt.

Bei dieser Ausführung ist der Linear-Aktor an seinem ersten Ende in oder an der ersten Führungshülse und an seinem gegenüberliegenden zweiten Ende in oder an der Führungsstange so angelenkt ist, dass durch die Linearbewegung des Linear-Aktors die Führungsstange in der ersten Führungshülse linear bewegbar ist. Der Linear-Aktor verschiebt also die erste Führungsstange in ihrer Führung.

Die Führungsstange sowie die erste und zweite Führungshülse sind dabei durch ein Koppelglied so miteinander so verbunden, dass die Relativbewegung zwischen Führungsstange und erster Führungshülse auch eine Relativbewegung zwischen erster und zweiter Führungshülse erzeugt. Die Führungsstange und die Führungshülsen bilden so eine gemeinsame durch einen Anschlag oder durch den Hub des Linear-Aktors begrenzbare Linearführung für die Pflanzenbearbeitungseinrichtung.

In einer weiteren vorteilhaften Ausbildung sind die Führungsstange sowie die erste und zweite Führungshülse durch ein Koppelglied so miteinander verbunden, dass die Relativbewegung zwischen Führungsstange und erster Führungshülse eine gleichgerichtete Relativbewegung zwischen erster und zweiter Führungshülse erzeugt. Dadurch erzeugt man beispielsweise eine Vergrößerung des linearen Verschiebeweges.

In einer vorteilhaften Weiterbildung ist das Koppelglied als Zugelement ausgebildet, wobei das Zugelement sowohl an der Führungsstange als auch an der mit der Halterung fest verbundenen zweiten Führungshülse fixiert ist und in der ersten Führungshülse gelagerte Laufräder umläuft, vorzugsweise jeweils an den Enden der ersten Führungshülse gelagerte Laufräder. Die durch den Linear-Aktor erzeugte lineare Bewegung der Führungsstange wird dann übersetzt auf die erste Führungshülse übertragen und die erste Führungshülse wird durch die Lagerkräfte der Laufräder ebenfalls innerhalb der zweiten Führungshülse verschoben.

Eine vorteilhafte Weiterbildung besteht darin, dass das Koppelglied als Zahnriemen oder Kette ausgebildet ist und in der ersten Führungshülse gelagerte gezahnte Laufräder oder Kettenräder umläuft.

Üblicherweise ist eine solche Verstellvorrichtung besonders gut für die horizontale Verstellung einer Pflanzenbearbeitungseinrichtung geeignet. Eine solche horizontale Verstell- bzw. Verschiebevorrichtung könnte z.B. zwei ineinander teleskopierbare Rohre umfassen. Eines der Rohre wird über einen Hydraulikzylinder ausgebildeten Linear-Aktor bewegt. Das äußere Rohr ist verschiebbar in einer Führung gelagert, die wiederum mit der Halterung fest verbunden ist. Eine Kette oder auch ein Seil ist an der Führung und an dem inneren Rohr befestigt. Bei Betätigung des Hydraulikzylinders, der zwischen dem inneren und dem äußeren Rohr wirkt, wird zum einen das innere Rohr aus dem äußeren Rohr herausgeschoben, zum anderen werden wegen der Kette/dem Seil die zusammengeschobenen teleskopierbaren Rohre aus einer ersten Haltelage, die ungefähr mittig zu dem zusammengeschobenen Rohrpaket liegt, zunehmend in eine zweite Haltelage verschoben, die an einem Ende des äußeren Rohres liegt. Hierdurch erfolgt eine Vergrößerung der linearen Bewegung, also eine betragsmäßige Veränderung des Verstellweges.

Eine weitere vorteilhafte Ausbildung der Erfindung besteht darin, dass die Halterung insgesamt als ein an einer mit dem Fahrzeug verbundenen Lagerkonsole angelenkter Ausleger ausgebildet ist und die Verstellvorrichtung am Ausleger derart angeordnet ist, dass die Pflanzenbearbeitungseinrichtung mit dem Ausleger über ein als Parallelogrammführung ausgebildetes Koppelgetriebe an der Lagerkonsole angelenkt ist, wobei das Koppelgetriebe ein Parallelogrammgetriebe mit langen Doppelarmen bildet, wodurch das Parallelogrammgetriebe einerseits winkeltreu in einer Verschieberichtung verschiebbar und andererseits um einen Winkel verschwenkbar ist. Damit kann dann der gesamte Ausleger und somit auch die Pflanzenbearbeitungseinrichtung einerseits winkeltreu verschoben und andererseits um einen Winkel verschwenkt werden.

Dabei ist einer der zwei langen Doppelarme des Parallelogrammgetriebes als ein erster Linear-Aktor ausgebildet, durch dessen Linearbewegung die Länge des betreffenden Doppelarms veränderbar und so der Ausleger um eine im Wesentlichen horizontale Achse verschwenkbar ist. Der andere der langen Doppelarme des Parallelogrammgetriebes ist durch einen zweiten Linear-Aktor um eine horizontale Achse schwenkbar, so dass der Ausleger in horizontaler Richtung winkeltreu verschiebbar ist. Eine Besonderheit dieser Ausbildung der Erfindung liegt darin, dass die gleichzeitig zu einer Lateralbewegung zwangsweise entstehende Hebebewegung während des Verschwenkens des Parallelogrammgetriebes reduziert ist und so die Antriebsleistung verringert werden kann.

Bei dieser Ausführung sind zwar zwei Linear-Aktoren vorgesehen, nämlich ein erster und ein zweiter Linear-Aktor, jedoch weist die Gesamtkonstruktion aufgrund des Zusammenspiels mit dem Parallelogrammgetriebe in Bezug auf die Baugröße und das Gewicht erhebliche Vorteile im Vergleich zu den aus dem Stand der Technik bekannten Verstelleinrichtungen auf. Das ist insbesondere dann der Fall, wenn in einer weiteren vorteilhaften Ausbildung der zweite Linear-Aktor an einem Kragarm der Lagerkonsole angelenkt ist, vorzugsweise an einem vertikal sich erstreckendem Kragarm, und der erste und zweite Linear-Aktor in Bezug auf eine die Schwenkrichtung beinhaltende vertikale Ebene über Kreuz angeordnet sind

Vorteilhafterweise ist dabei der zweite Linear-Aktor einerseits an der Lagerkonsole und andererseits im unteren Bereich des zweiten Doppelarms von dessen Konsolenlager beabstandet angelenkt. Das erlaubt eine sehr platzsparende Anordnung in vertikaler Richtung, d. h. in Schwenkrichtung.

Ein in Hinsicht auf eine platzsparende Anordnung in vertikaler Richtung und in Längsrichtung der Lagerkonsole noch wesentlich größerer Effekt ergibt sich durch eine weitere vorteilhafte Ausführung, bei der der erste und zweite Linear-Aktor als Hydraulikzylinder ausgebildet sind, deren Kolbenstangen und Zylinder jeweils wechselseitig gegenüberliegend und benachbart angeordnet sind. Eine solche wechselseitig gegenüberliegende Anordnung über Kreuz führt dazu, dass die lateralen Ausdehnungen, d. h. die Breiten bzw. die Durchmesser der jeweiligen Bauteile in eine Kombination minimaler Baugröße gebracht werden, bei der die Kolbenstange des einen Hydraulikzylinders direkt benachbart zum Zylinder des anderen Hydraulikzylinders angeordnet ist.

Eine weitere vorteilhafte Ausbildung der Erfindung besteht darin, dass das Parallelogrammgetriebe auslegerseitig einen Flansch in Form einer ersten Anbauplatte aufweist, an welche unterschiedliche Ausleger oder Anbauten mit Hilfe einer an letzteren vorgesehen korrespondierenden Anbauplatte anschließbar sind. Auf diese Weise können verschiedene Bearbeitungsmaschinen und Geräte über eine einzige komplementär und jeweils passend zueinander ausgebildete Anschlussstelle mit der Konsole, respektive mit dem Parallelogrammgetriebe, verbunden werden. Dazu können natürlich auch zu der Anbauplatte passende Distanzstücke vorgesehen bzw. zwischengelegt werden, die einen entsprechend angepassten Versatz der korrespondierenden Anbauplatten an den Geräten erlauben.

Eine weitere vorteilhafte Ausbildung besteht darin, dass der jeweilige Ausleger mit den Bearbeitungsmaschinen über einen Hubmast mit dem Parallelogrammgetriebe verbunden ist, wobei Parallelogrammgetriebe und Hubmast korrespondierende Anbauplatten aufweisen. Der im Fachbereich gängige Begriff "Hubmast" bezeichnet eine vertikale Stange, die längenverstellbar ausgebildet ist, meistens teleskopartig längenverstellbar ist. Ein solcher Hubmast kann natürlich auch in Form von zusammenwirkenden teleskopierbaren Führungshülsen und Führungsstangen aufgebaut sein, wie sie oben in einer vorteilhaften Ausbildung der Erfindung beschrieben sind.

Vorteilhafterweise weist auch der auslegerseitige Hubmast eine Anschlussplatte auf, die mit unterschiedlichen Auslegern oder Anbauten mit Hilfe einer an letzteren vorgesehen korrespondierenden Anschlussplatte verbindbar ist. Eine solche Ausbildung auch dieser Anschlussbereiche erleichtert den schnellen Wechsel von Auslegern mit Bearbeitungsmaschinen an den Hubmast.

Demselben Prinzip einer einfachen Kombination und Montage folgt eine weitere vorteilhafte Ausbildung der Erfindung, bei der die Lagerkonsole vorderseitig und/oder rückseitig je eine zweite Anbauplatte aufweist, welche mit einer korrespondierenden Anbauplatte eines Fahrzeugs verbindbar ist. Damit ergibt sich die Möglichkeit, die Lagerkonsole und damit die über das Parallelogrammgetriebe befestigten Ausleger und Bearbeitungsmaschinen an verschiedene Fahrzeuge und in verschiedenen Bereichen eines Fahrzeugs anzubauen. So lässt sich eine solche Konsole beispielsweise an einem mit einer korrespondierender Anbauplatte versehenen zentralen Tragbalken im hinteren Bereich eines Traktors befestigen oder auch am vorderen Bereich, ebenso an einem nachlaufenden Anhänger, der von einem Traktor gezogen wird. Es ergibt sich hierdurch also die Möglichkeit, die gezeigte Halterung ohne Probleme mit verschiedensten Fahrzeugen zu verbinden.

Besonders bei Blattschneideeinrichtungen ist es vorteilhaft, ein landwirtschaftliches Fahrzeug mit einer an einer erfindungsgemäßen Halterung vorgesehenen Blattschneideeinrichtung auszurüsten, da es bei solchen Pflanzenbearbeitungseinrichtungen besonders auf genaue Zustellungen, Neigungen und Bearbeitungsabstände ankommt. Da man auch dort möglichst zeitsparende und kostengünstige Arbeitsabläufe wünscht, müssen die Blattschneideeinrichtungen großflächig arbeiten, d. h. in ihren Abmessungen möglichst groß sein. Solche Einrichtungen benötigen aber dann Halterungen mit Konstruktionen, die ein möglichst kompaktes Zusammenfahren bzw.

Zusammenfalten der Bearbeitungseinrichtungen für den Transportzustand erlauben.

Anhand der Ausführungsbeispiele soll die Erfindung näher erläutert werden. Dabei sind auch die vorteilhaften Weiterbildungen der Ausführungen im Detail beschrieben. Es zeigen
- Fig. 1: eine Darstellung eines landwirtschaftlichen Fahrzeugs mit Halterungen für Pflanzenbearbeitungseinrichtungen in skizzenhafter Form,
- Fig. 2: eine prinzipielle Gesamtansicht der Halterungen ohne das landwirtschaftliche Fahrzeug in detaillierterer Ansicht,
- Fig. 3: eine Ausführung einer Verstellvorrichtung in einer erfindungsgemäßen Halterung,
- Fig. 4: eine weitere Ausführung einer Verstellvorrichtung in einer erfindungsgemäßen Halterung,
- Fig. 5: eine dritte Ausführung einer Verstellvorrichtung in einer erfindungsgemäßen Halterung,
- Fig. 6: Lagerkonsole und Parallelogrammgetriebe der Ausführung gemäß Fig. 5 in einer perspektivischen Ansicht, außenseitig,
- Fig. 7: Lagerkonsole und Parallelogrammgetriebe der Ausführung gemäß Fig. 5 in einer perspektivischen Ansicht, fahrzeugseitig.

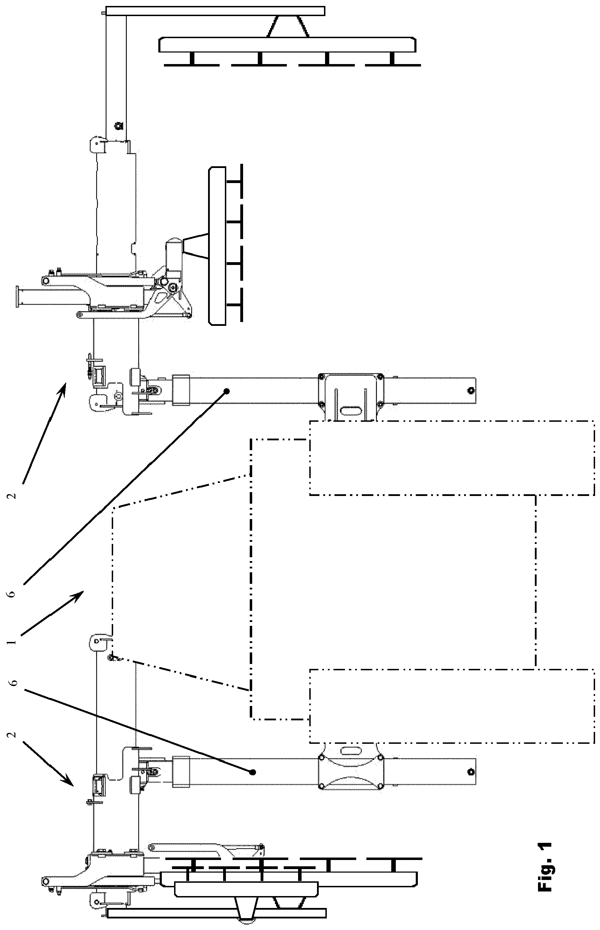

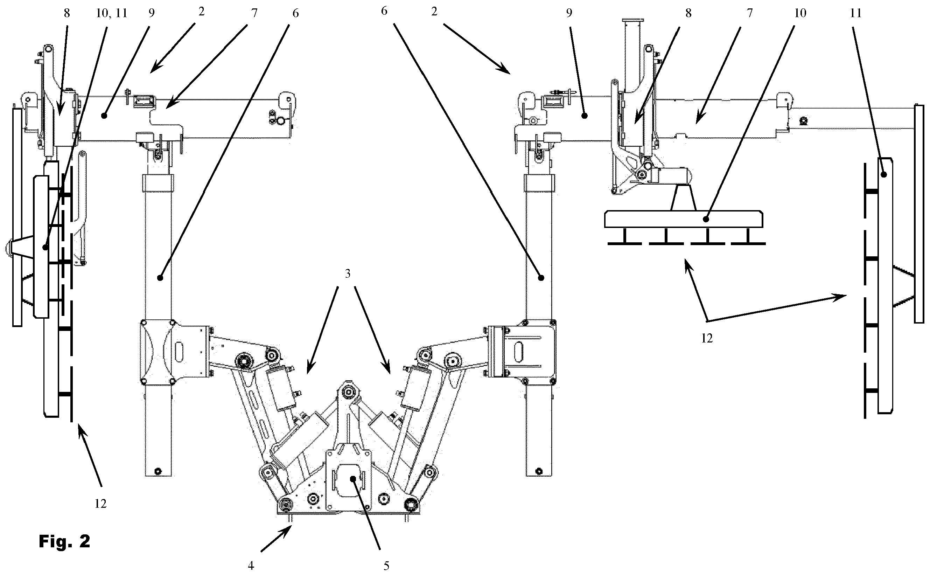

Die Fig. 1 zeigt in Form einer vereinfachten skizzierten Darstellung ein landwirtschaftliches Fahrzeug 1 von seiner Rückseite, welches mit an seiner Vorderseite angebrachten Halterungen 2 für Pflanzenbearbeitungseinrichtungen versehen ist. Der Übersichtlichkeit halber sind hier nur die ungefähren Umrisse eines solchen Fahrzeugs 1 durch strichpunktierte Linien dargestellt. Fig. 2 zeigt eine Gesamtansicht der Halterung ohne das landwirtschaftliche Fahrzeug in detaillierterer Form.

Man erkennt in der Fig. 2, dass zwei als galgenförmige Ausleger ausgebildete Halterungen 2 an einer Lagerkonsole 4 angeschlossen bzw. angelenkt sind. Die Halterungen sind dabei über Verstellvorrichtungen 3 an der Lagerkonsole befestigt, wobei die Verstellvorrichtungen 3 als Koppelgetriebe in Form von Parallelogrammführungen ausgebildet sind (Parallelogrammgetriebe). Weiter unten sind diese Verstellvorrichtungen näher beschrieben. Die Lagerkonsole ist auf einem mittig angeordneten, zentralen Tragbalken 5 des hier nicht näher dargestellten landwirtschaftlichen Fahrzeugs befestigt und kann so leicht gegen andere Bearbeitungsgeräte ausgetauscht werden.

Die galgenförmigen Ausleger 2 weisen in dieser Ausführung jeweils eine senkrechte Tragstange 6 und eine erste Verstellvorrichtung 7 auf, die am oberen Ende der Tragstange 6 waagerecht ausgerichtet mit der Tragstange verbunden ist. Die erste Verstellvorrichtung 7 bildet so einen quer zur Tragstange 6 angeordneten Kragarm. Mit dem Kragarm bzw. mit Verstellvorrichtung 7 ist eine weitere Verstellvorrichtung 8 verbunden, die an einer äußeren Führungshülse 9 der Verstellvorrichtung 7 befestigt ist.

An den Verstellvorrichtung 7 und 8 sind jeweils Blattschneideeinrichtungen 10, 11 angeordnet. Die Blattschneideeinrichtungen sind hier lediglich skizzenhaft dargestellt und beinhalten an ihrer Arbeitsseite rotierend angetriebene Messer 12. Der in der Fig. 2 auf der rechten Seite dargestellte Ausleger 2 ist in einem ausgefahrenen Zustand dargestellt, während der auf der linken Seite dargestellte Ausleger 2 im Transportzustand gezeichnet ist, bei dem die Blattschneideeinrichtungen 10, 11 möglichst wenig Raum einnehmen und dadurch die Fahrzeugbreite minimiert ist.

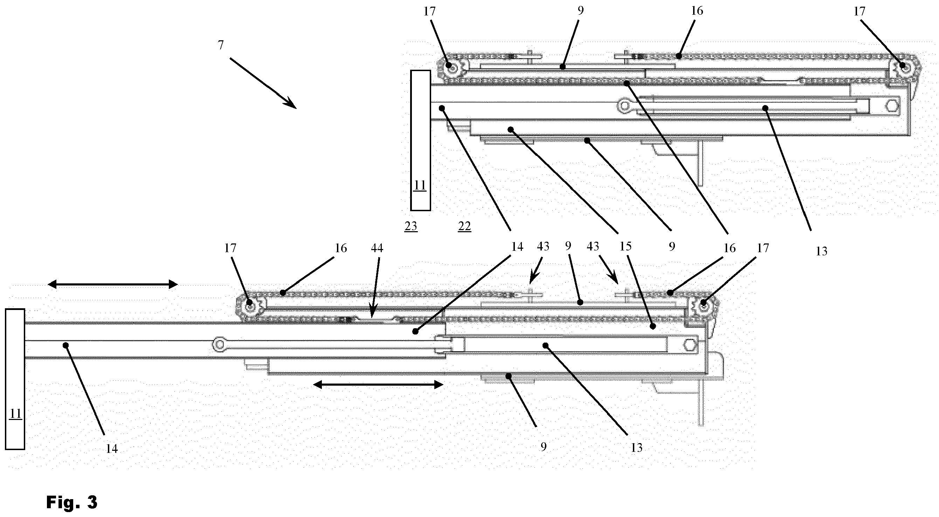

Fig. 3 zeigt die auf der linken Seite der Fig. 2 gezeigte Verstellvorrichtung 7 im Detail, jedoch zur Vereinfachung in einer skizzenhaften Darstellung ohne Details der Blattschneideeinrichtung 11 und ohne die Darstellung benachbarter oder anschließender Konstruktionsteile.

Dabei ist im oberen Teil der Fig. 3 die Verstelleinrichtung 7 in einem Zustand gezeigt, der in etwa dem Transportzustand entspricht und in dem die Blattschneideeinrichtung 11 so nah wie möglich an die Fahrzeugmitte des landwirtschaftlichen Fahrzeugs herangefahren ist.

Im unteren Teil der Fig. 3 ist demgegenüber die Verstelleinrichtung 7 in dem Zustand gezeigt, in dem die Blattschneideeinrichtung 11 so weit wie möglich seitlich ausgefahren ist.

Die Blattschneideeinrichtung 11 ist dazu an einer teleskopierbaren Führungsstange 14 befestigt, die durch den als Hydraulikzylinder 13 ausgebildeten Linear-Aktor verschiebbar ist. Die Führungsstange 14 wird in einer ersten Führungshülse 15 der Verstelleinrichtung linear geführt ist.

Diese erste Führungshülse 15 ist in einer an der Halterung 2 befestigten zweiten Führungshülse 9 der Verstelleinrichtung 7 angeordnet, siehe auch Fig. 2, und ist relativ zu dieser zweiten Führungshülse 9 ebenfalls linear geführt.

Der Hydraulikzylinder 13 ist an seinem ersten Ende in der ersten Führungshülse 15 und an seinem gegenüberliegenden zweiten Ende in der Führungsstange 14 so angelenkt und gelagert, dass durch die Linearbewegung des Hydraulikzylinders 13 die Führungsstange 14 in der ersten Führungshülse 15 linear bewegbar, d.h. verschiebbar ist.

Die Führungsstange 14 sowie die erste und zweite Führungshülse 15, 9 sind durch ein Koppelglied, hier eine Kette 16, so miteinander verbunden, dass die Verschiebebewegung zwischen Führungsstange 14 und erster Führungshülse 15 ebenfalls eine Relativbewegung/Verschiebbewegung zwischen erster und zweiter Führungshülse 15, 9 erzeugt, so dass die Führungsstange und die Führungshülsen eine gemeinsame durch den Hub des Hydraulikzylinders 13 begrenzbare Linearführung für die Pflanzenbearbeitungseinrichtung bilden. Durch die Kette 16 als Koppelglied wird eine gleichgerichtete Relativbewegung zwischen Führungsstange und erster Führungshülse sowie zwischen erster und zweiter Führungshülse erzeugt. Es entsteht also eine Vergrößerung bzw. Verlängerung der linearen Bewegung.

Die Kette 16 ist hier in Form von zwei einzelnen Kettenteilen ausgebildet, die jeweils an ihren Enden einerseits an der ersten Führungshülse 15 und andererseits an der zweiten Führungshülse 9 befestigt sind, so dass für Hub und für Rückhub des Hydraulikzylinders 13 nur Zugkräfte maßgeblich sind, um die Kräfte von der ersten auf die zweite Führungshülse zu übertragen. Die Befestigung der Kette 16 erfolgt dabei über die Kettenschlösser 43 und 44.

Die Kette bzw. die Kettenglieder 16 umlaufen dabei in der ersten Führungshülse 15 gelagerte Kettenräder 17, sodass die durch den Hydraulikzylinder 13 erzeugten linearen Kräfte über die Kettenradlagerungen auf die erste Führungshülse 15 übertragen werden und diese ebenfalls in der zweiten Führungshülse 9 verschieben.

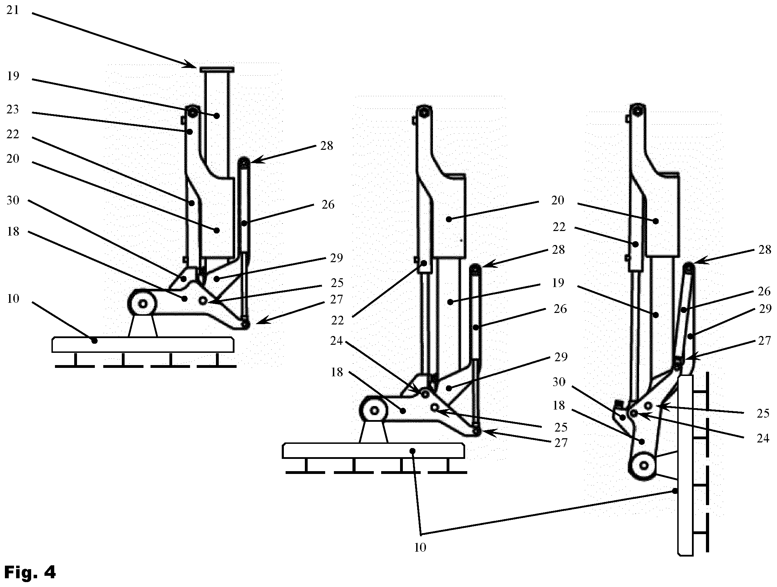

Fig. 4 zeigt die in der Fig. 2 dargestellt linkseitige Verstellvorrichtung 8 im Detail, jedoch zur Vereinfachung in einer skizzenhaften Darstellung und ohne die Darstellung benachbarter oder anschließender Konstruktionsteile. Die Blattschneideeinrichtung 10 ist hier ebenfalls nur prinzipiell dargestellt.

Die Fig. 4 besteht dabei aus drei einzelnen Darstellungen, die von links nach rechts zunächst auf der linken Seite einen Zustand zeigen, in der die Blattschneideeinrichtung 10 in Arbeitsstellung zu sehen ist. In der Mitte ist die Blattschneideeinrichtung 10 nach einem linearen Verfahrweg in senkrechter Richtung in abgesenkter Stellung gezeigt. In der rechten Darstellung erkennt man die Blattschneideeinrichtung 11 nach einem linearen Verfahrweg in senkrechter Richtung und anschließender Schwenkung um eine um eine quer zu der Linearbewegung der Führungsstange liegende Achse. Alle Bewegungen werden dabei durch einen einzigen als Hydraulikzylinder 22 ausgebildeten Linear-Aktor durchgeführt, wie im Weiteren beschrieben ist.

Die Blattschneideeinrichtung 10 ist hierzu in dieser Ausführung an einem Koppellenker 18 befestigt ist, welcher schwenkbar an einem ersten Ende einer Führungsstange 19 gelagert ist, nämlich in einem dort angeordneten Schwenklager 25. Die Führungsstange 19 ist in einer an der Halterung befestigten Führungshülse 20 der Verstellvorrichtung 8 relativ zur Halterung linear geführt bewegbar.

Die Führungsstange 19 und die Führungshülse 20 bilden eine durch einen Anschlag 21 in einer Endstellung begrenzbare Linearführung für den Koppellenker 18 und die Blattschneideeinrichtung 10 aus.

Der Hydraulikzylinder 22 ist an seinem ersten Ende schwenkbar am Ende eines Flansches 23 der Führungshülse gelagert und an seinem gegenüberliegenden zweiten Ende an einem ersten Anlenkpunkt 24 des Koppellenkers so angelenkt ist, dass durch die Linearbewegung der Kolbenstange des Hydraulikzylinders 22 sowohl die Führungsstange linear bewegbar als auch die Pflanzenbearbeitungseinrichtung in Bezug auf die Führungsstange schwenkbar ist.

Erst durch die zusätzliche Anlenkung des Koppellenkers 18 an die Führungsstange 19 mittels einer Gasdruckfeder werden die beiden Bewegungen, nämlich die lineare Verschiebung und die Schwenkbewegung nacheinander ausführbar.

Ein als Gasdruckfeder 26 (Teleskopfeder) ausgebildetes Koppelelement ist dazu einerseits über einen oben liegenden Anlenkpunkt 28 an einem Auslegerarm 29 der Führungsstange 19 angelenkt und dadurch mit letzterer linear verschiebbar. Andererseits ist die Gasdruckfeder an einem zweiten Anlenkpunkt 27 des Koppellenkers 18 so angelenkt, dass die Federkraft der Teleskopfeder der durch den Hydraulikzylinder 22 ausgeübten Bewegungskraft entgegenwirkt.

Hierzu ist die Gasdruckfeder 26 so eingestellt, dass die Bewegungskraft nur in dem Maße kompensiert wird, dass eine Schwenkbewegung des Koppelelements 18 und der damit verbundenen Blattschneideeinrichtung 10 nur und während der Linearbewegung der Führungsstange 19 bis zum Erreichen ihrer durch den Anschlag 20 bestimmten Endstellung verhindert ist. Danach, also nach Erreichen der Endstellung der linearen Bewegung der Führungsstange 19, wird die Gasdruckfeder durch die weitere lineare Bewegung des Hydraulikzylinders 22 zusammengedrückt. Beim Rückhub erfolgt dann umgekehrt zunächst das Zurückschwenken der Blattschneideeinrichtung 10 und anschließend die entgegengesetzte Linearbewegung.

Wie bereits oben dargestellt, erfolgt also beim Ausfahren des Hydraulikzylinders über den unteren Endpunkt hinaus eine Schwenkung der am Koppellenker 18 befestigten Blattschneideeinrichtung 10 um eine quer zu der Führungsstange 19 liegende Achse.

Vorteilhafterweise ist die Konstruktion so ausgebildet, dass auch die Schwenkbewegung des Koppellenkers und der damit verbundenen Pflanzenbearbeitungseinrichtung mindestens in einer Schwenkrichtung durch einen Anschlag 30 begrenzt ist. Der Anschlag 30 ist hier am Koppellenker 18 angeordnet.

In der Fig. 4 ist ebenfalls erkennbar, dass zur Ausbildung günstiger Hebelverhältnisse der erste und der zweite Anlenkpunkt 24, 27 in Bezug auf das Schwenklager 25 des Koppellenkers 18 auf gegenüberliegenden Seiten des Koppellenkers angeordnet sind.

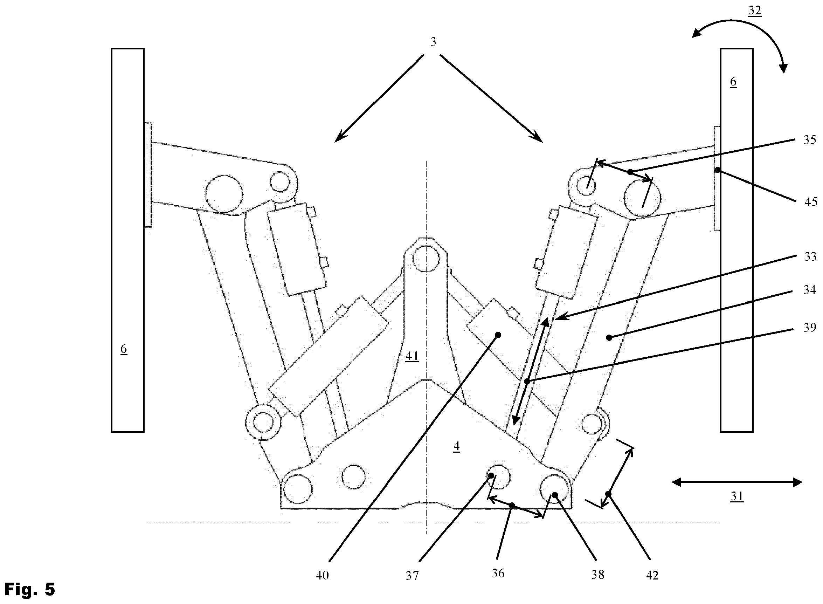

Fig. 5 zeigt eine besonders vorteilhafte Ausführung der Erfindung zunächst in einer skizzenhaften Darstellung, nämlich vergrößert die in der Fig. 2 dargestellte Lagerkonsole 4, an der die Pflanzenbearbeitungseinrichtung mit dem Ausleger 2 über ein als Parallelogrammführung ausgebildetes Koppelgetriebe angelenkt ist.

Das Koppelgetriebe bildet hier ein Parallelogrammgetriebe 3 mit langen Doppelarmen 33 und 34, wodurch das Parallelogrammgetriebe einerseits winkeltreu in einer Verschieberichtung 31 verschiebbar und andererseits um einen Winkel 32 verschwenkbar ist

Die senkrechten Tragstangen bzw. Hubmasten 6 der Ausleger 2 sind in Fig. 5 nur prinzipiell dargestellt. Auf die Darstellung des zentralen Tragbalkens 5 als Verbindung zum landwirtschaftlichen Fahrzeug wurde hier ebenfalls verzichtet. Da die Parallelogrammgetriebe 3 spiegelbildlich zueinander an der Konsole 4 vorgesehen sind, ist hier lediglich das Parallelogrammgetriebe 3 auf der rechten Seite der Fig.5 beschrieben.

Beide Pflanzenbearbeitungseinrichtungen 10, 11 sind damit über die weiteren oben dargestellten Verstelleinrichtungen und über die als Ausleger 2 ausgebildete Halterung und deren Hubmast 6 an der Lagerkonsole befestigt. Sie sind somit auch über das als Parallelogrammführung ausgebildetes Koppelgetriebe (Parallelogrammgetriebe) an der Lagerkonsole angelenkt. Der Hubmast 6 und damit der Ausleger 2 sind dabei einerseits winkeltreu in horizontaler Richtung 31 verschiebbar und andererseits um einen Winkel 32 verschwenkbar.

Die hier gezeigte rechte (und auch linke) Parallelogrammgetriebe 3 (Parallelogrammverstellung) besteht dabei jeweils aus den langen Doppelarmen 33 und 34 und den damit zu einem Koppelgetriebe verbundenen kurzen Doppelarme 35 und 36. Der kurze Doppelarm 35 ist an seinem auslegerseitigen Ende gleichzeitig als Flansch in Form einer ersten Anbauplatte 45 für die Tragstange bzw. den Hubmast 6 ausgebildet. Der kurze Doppelarm 36 wird durch den Abstand der beiden Anlenkpunkte 37 und 38 in der Lagerkonsole realisiert.

Einer der langen Doppelarme des Parallelogrammgetriebes, hier der Doppelarm 33, ist als Linear-Aktor, hier als Hydraulikzylinder ausgebildet, durch dessen Linearbewegung 39 die Länge des Doppelarms 33 veränderbar und so die Tragstange 6 bzw. der Ausleger 2 um eine im Wesentlichen horizontale Achse um den Winkel 32 schwenkbar ist.

Der andere lange Doppelarm 34 des Parallelogrammgetriebes ist durch einen ebenfalls als Hydraulikzylinder 40 ausgebildeten zweiten Linear-Aktor um eine horizontale Achse, nämlich um den Anlenkpunkt 38 schwenkbar, wodurch der Hubmast 6 und somit der Ausleger 2 in horizontaler Richtung 31 winkeltreu verschiebbar ist.

Dazu ist der Hydraulikzylinder 40 einerseits an einem senkrecht nach oben vorspringenden Kragarm 41 der Lagerkonsole 4 angelenkt. An seinem anderen Ende ist der Hydraulikzylinder 40 im unteren Bereich des zweiten Doppelarms 34 angelenkt, nämlich im Abstand 42 von dessen Konsolenlagerung/Anlenkpunkt 38.

In Fig. 5 ist auch deutlich erkennbar, dass der der erste und zweite Hydraulikzylinder 33, 40 in Bezug auf eine zur Zeichnungsebene parallele vertikale Ebene über Kreuz angeordnet sind, was die oben bereits dargestellten Vorteile in Bezug auf Baugröße und Gewicht der Parallelogrammverstellung 3 begründet.

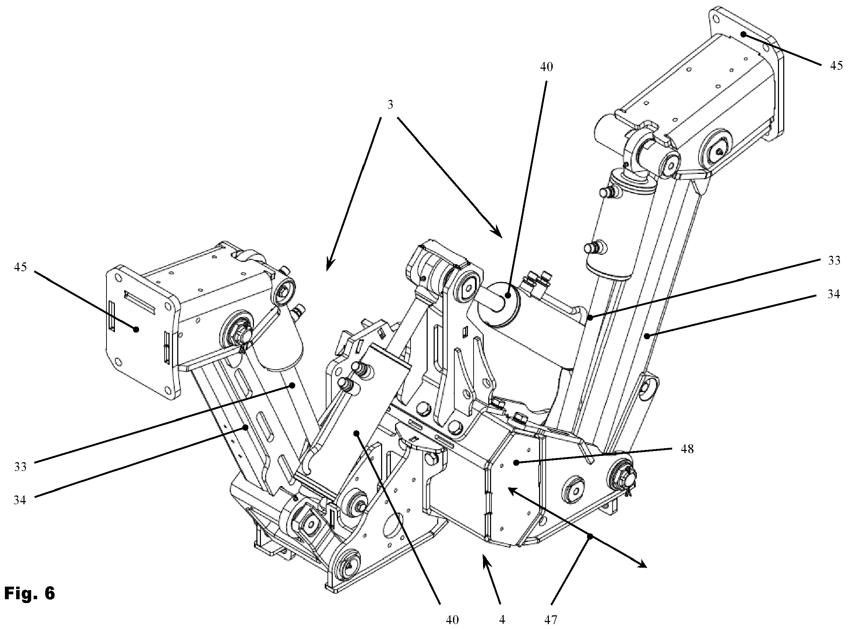

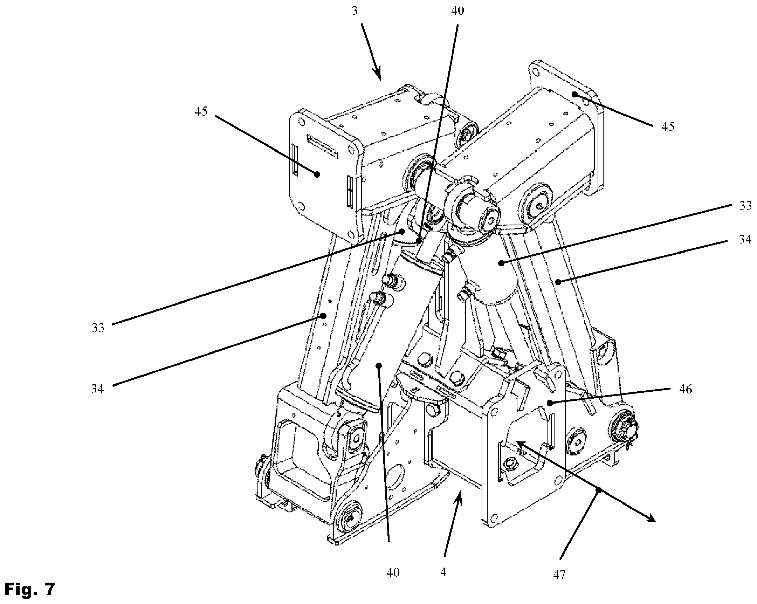

Fig. 6 und 7 zeigen nun die Lagerkonsole 4 mit Parallelogrammgetriebe 3 der Übersicht halber und zur Verdeutlichung der Kinematik in einer detaillierten und perspektivischen Ansicht ohne Anbauteile, Hubmasten und Ausleger.

Dabei zeigt Fig. 6 das Parallelogrammgetriebe 3 in einem Zustand, in der die Ausleger bzw. der Hubmast mit Ausleger für die Pflanzenbearbeitungseinrichtung auf einen maximalen lateralen Abstand ausgeschwenkt sind, während die Fig. 7 dasselbe Parallelogrammgetriebe zeigt, nachdem es auf seine Minimalbreite zusammengefahren ist.

Gleichzeitig zeigt Fig. 7 die Lagerkonsole 4 von ihrer Anschlussseite zum Fahrzeug, bei der die zweite Anbauplatte 46 zu erkennen ist. Diese zweite Anbauplatte 46 kann dann mit einer hier nicht dargestellten korrespondierenden Anbauplatte am Fahrzeug verbunden werden. Die Fig. 7 zeigt dagegen die Lagerkonsole von der anderen Seite, seiner Außenseite, an der in diesem Fall keine Anbauplatte vorhanden ist, sondern lediglich eine Verschlussplatte 48.

Man erkennt hier deutlich, dass die Hydraulikzylinder 33 und 40 mit ihren Kolbenstangen und Zylindern über Kreuz und jeweils wechselseitig gegenüberliegend und benachbart angeordnet sind. Wie bereits oben ausgeführt, führt eine solche Anordnung dazu, dass die lateralen Ausdehnungen minimiert werden, d. h. hier insbesondere die Ausdehnung in Längsrichtung 47 der Lagerkonsole 4, was dann zur Folge hat, dass die Gesamtlänge eines Fahrzeugs reduziert wird und dass auch bei Erreichen der Minimalbreite kein zusätzlicher Bauraum für Schwenkbewegungen des Parallelogrammgetriebes benötigt wird.

Ebenfalls ist hier zu erkennen, dass das Parallelogrammgetriebe 3 auslegerseitig einen Flansch in Form einer ersten Anbauplatte 45 aufweist, an welche unterschiedliche Ausleger oder Anbauten anschließbar sind. Hierzu sind die entsprechenden Ausleger oder Anbauten natürlich ebenfalls mit einer hier ebenfalls nicht dargestellten korrespondierenden Anbauplatte zu versehen.

### Bezugszeichenliste

### (Teil der Beschreibung)

1 landwirtschaftliches Fahrzeug
2 Halterung
3 Verstellvorrichtung / Parallelogrammverstellung / Parallelogrammgetriebe
4 Lagerkonsole
5 Tragbalken des landwirtschaftlichen Fahrzeugs
6 senkrechte Tragstange, Hubmast
7 Verstellvorrichtung, ausgebildet als Kragarm
8 Verstellvorrichtung
9 zweite Führungshülse der Verstellvorrichtung 7
10 Blattschneideeinrichtung (Pflanzenbearbeitungseinrichtung)
11 Blattschneideeinrichtung (Pflanzenbearbeitungseinrichtung)
12 rotierende Messer der Blattschneideeinrichtung
13 Hydraulikzylinder / Linear-Aktor
14 Führungsstange
15 erste Führungshülse der Verstellvorrichtung 7
16 Kette / Koppelglied
17 Kettenrad
18 Koppellenker
19 Führungsstange
20 Führungshülse
21 Anschlag
22 Hydraulikzylinder / Linear-Aktor
23 Flansch der Führungshülse 20
24 erster Anlenkpunkt
25 Schwenklager
26 Gasdruckfeder / Teleskopfeder
27 zweiter Anlenkpunkt
28 Anlenkpunkt
29 Auslegerarm der Führungsstange 19
30 Anschlag am Koppellenker
31 horizontale Verschieberichtung des Auslegers
32 Schwenkwinkel des Auslegers 2
33 langer Doppelarm, Hydraulikzylinder/Linear-Aktor
34 langer Doppelarm
35 kurzer Doppelarm
36 kurzer Doppelarm
37 Anlenkpunkt
38 Anlenkpunkt, Konsolenlager des Doppelarms 34
39 Linearbewegung des Hydraulikzylinders 33
40 Hydraulikzylinder / Linear-Aktor
41 Kragarm an der Konsole 4
42 Abstand
43 Kettenschloss
44 Kettenschloss
45 Flansch / erste Anbauplatte an der Verstellvorrichtung / Parallelogram mverstellung
46 zweite Anbauplatte an der Lagerkonsole
47 Längsrichtung der Lagerkonsole
48 Verschlussplatte Parallelogrammverstellung
46 zweite Anbauplatte an der Lagerkonsole
47 Längsrichtung der Lagerkonsole
48 Verschlussplatte

## Patentansprüche

1. Halterung (2) einer an einem landwirtschaftlichen Fahrzeug (1) befestigten Pflanzenbearbeitungseinrichtung (10, 11), vorzugsweise einer Blattschneideeinrichtung für Reihenkulturen, wobei die Pflanzenbearbeitungseinrichtung (10, 11) mittels an der Halterung vorgesehenen Verstellvorrichtungen (3, 7, 8) relativ zur Halterung, zum Fahrzeug und zur Pflanze verstellbar ausgebildet ist, wobei mindestens eine der Verstellvorrichtungen einen an der Halterung angelenkten Linear-Aktor (13, 22, 33) mit einem linearem Verstellweg aufweist, **dadurch gekennzeichnet, dass** der Linear-Aktor (13, 22, 33) mit weiteren Lenkern, Koppelgliedern und/oder Führungen ein Koppelgetriebe bildet, welches so mit der Halterung (2) verbunden ist, dass eine durch den Linear-Aktor (13, 22, 33) bewirkte Linearbewegung über mindestens Teile des Verstellweges in eine Drehung oder Kippung der Pflanzenbearbeitungseinrichtung (10, 11) oder in eine betragsmäßige Veränderung des linearen Verstellweges der Pflanzenbearbeitungseinrichtung überführbar ist.

2. Halterung nach Anspruch 1, bei der
- die Pflanzenbearbeitungseinrichtung an einem Koppellenker (18) befestigt ist, welcher schwenkbar an einem ersten Ende einer Führungsstange (19) gelagert ist, die in einer an der Halterung befestigten Führungshülse (20) der Verstellvorrichtung (8) relativ zur Halterung (2) linear geführt bewegbar ist,
- wobei die Führungsstange (19) und die Führungshülse (20) eine durch einen Anschlag (21) in einer Endstellung begrenzbare Linearführung für den Koppellenker (18) und die Pflanzenbearbeitungseinrichtung (10) bilden,
- der Linear-Aktor (22) an seinem ersten Ende schwenkbar an der Führungshülse (20) gelagert und an seinem gegenüberliegenden zweiten Ende an einem ersten Anlenkpunkt (24) des Koppellenkers (18) so angelenkt ist, dass durch die Linearbewegung des Linear-Aktors (22) sowohl die Führungsstange (19) linear bewegbar als auch die Pflanzenbearbeitungseinrichtung (10) in Bezug auf die Führungsstange (19) schwenkbar ist,
- wobei ein als Teleskopfeder ausgebildetes Koppelelement (26) einerseits an der Führungsstange (19) und mit letzterer linear verschiebbar und andererseits an einem zweiten Anlenkpunkt (27) des Koppellenkers (18) so angelenkt ist, dass die Federkraft der Teleskopfeder (26) der durch den Linear-Aktor (22) ausgeübten Bewegungskraft entgegenwirkt und letztere soweit kompensiert, dass eine Schwenkbewegung des Koppellenkers (18) und der damit verbundenen Pflanzenbearbeitungseinrichtung (10) während der Linearbewegung der Führungsstange (19) bis zum Erreichen ihrer durch den Anschlag (20) bestimmten Endstellung verhindert ist.

3. Halterung nach Anspruch 2, bei der die Dreh- oder Schwenkachsen aller Anlenkpunkte (24, 27, 28) und des Schwenklagers (25) des Koppellenkers (18) parallel sind und so die Pflanzenbearbeitungseinrichtung (10) um eine quer zu der Linearbewegung der Führungsstange (19) liegende Achse schwenkbar ist.

4. Halterung nach Anspruch 2 oder 3, bei der die Schwenkbewegung des Koppelgliedes (18) und der damit verbundenen Pflanzenbearbeitungseinrichtung (10) mindestens in einer Schwenkrichtung durch einen Anschlag (21) begrenzt ist.

5. Halterung nach einem der Ansprüche 2 bis 4, bei der der erste und der zweite Anlenkpunkt (24, 27) in Bezug auf das Schwenklager (25) des Koppellenkers (18) in der Führungsstange (19) auf gegenüberliegenden Seiten des Koppellenkers (18) angeordnet sind.

6. Halterung nach Anspruch 1, bei der
- die Pflanzenbearbeitungseinrichtung (11) an einer durch den Linear-Aktor (13) teleskopierbaren Führungsstange (14) befestigt ist, die in einer ersten Führungshülse (15) der Verstelleinrichtung (7) linear geführt ist,
- die erste Führungshülse (15) in einer an der Halterung (2) befestigten zweiten Führungshülse (9) der Verstelleinrichtung (7) angeordnet und relativ zur zweiten Führungshülse (9) linear geführt ist,
- ein Linear-Aktor (13) an seinem ersten Ende in oder an der ersten Führungshülse (15) und an seinem gegenüberliegenden zweiten Ende in oder an der Führungsstange (14) so angelenkt ist, dass durch die Linearbewegung des Linear-Aktors (13) die Führungsstange (14) in der ersten Führungshülse (15) linear bewegbar ist,
- wobei die Führungsstange (14) sowie die erste und zweite Führungshülse (15, 9) durch ein Koppelglied (16) so miteinander so verbunden sind, dass die Relativbewegung zwischen Führungsstange (14) und erster Führungshülse (15) eine Relativbewegung zwischen erster und zweiter Führungshülse (15, 9) erzeugt, so dass die Führungsstange (14) und die Führungshülsen (15, 9) eine gemeinsame durch einen Anschlag (21) oder durch den Hub des Linear-Aktors begrenzbare Linearführung für die Pflanzenbearbeitungseinrichtung (11) bilden.

7. Halterung nach Anspruch 6, bei der die Führungsstange (14) sowie die erste und zweite Führungshülse (15, 9) durch ein Koppelglied (16) miteinander so verbunden sind, dass die Relativbewegung zwischen Führungsstange (14) und erster Führungshülse (15) eine gleichgerichtete Relativbewegung zwischen erster und zweiter Führungshülse (15, 9) erzeugt.

8. Halterung nach Anspruch 6 oder 7, bei der das Koppelglied (16) als Zugelement, ausgebildet ist, wobei das Zugelement (16) sowohl an der Führungsstange (14) als auch an der zweiten Führungshülse (9) fixiert ist und in der ersten Führungshülse (15) gelagerte Laufräder (17) umläuft, vorzugsweise jeweils an den Enden der ersten Führungshülse (15) gelagerte Laufräder.

9. Halterung nach Anspruch 8, bei der das Koppelglied als Zahnriemen oder Kette (16) ausgebildet ist und in der ersten Führungshülse (15) gelagerte gezahnte Laufräder oder Kettenräder (17) umläuft.

10. Halterung nach Anspruch 8 oder 9, bei der jeweils ein Zugelement für Hub und für Rückhub des Linear-Aktors (13) vorgesehen und jeweils mit einem Ende an der Führungsstange (14) und dem anderen Ender an der zweiten Führungshülse (15) fixiert ist.

11. Halterung nach Anspruch 1, ausgebildet als ein an einer mit dem Fahrzeug verbundenen Lagerkonsole (4) angelenkter Ausleger (2), bei der
- die Pflanzenbearbeitungseinrichtung mit dem Ausleger (2) über ein als Parallelogrammführung ausgebildetes Koppelgetriebe an der Lagerkonsole (4) angelenkt ist, wobei das Koppelgetriebe ein Parallelogrammgetriebe (3) mit langen Doppelarmen (33, 34) bildet, wodurch das Parallelogrammgetriebe einerseits winkeltreu in einer Verschieberichtung (31) verschiebbar und andererseits um einen Winkel (32) verschwenkbar ist,
- wobei einer der zwei langen Doppelarme (33) des Parallelogrammgetriebes (3) als ein erster Linear-Aktor ausgebildet ist, durch dessen Linearbewegung die Länge des betreffenden Doppelarms (33) veränderbar und so der Ausleger (2) um eine im Wesentlichen horizontale Achse verschwenkbar ist,
- wobei der andere der langen Doppelarme (34) des Parallelogrammgetriebes durch einen zweiten Linear-Aktor (40) um eine horizontale Achse schwenkbar und so der Ausleger in horizontaler Verschieberichtung (31) winkeltreu verschiebbar ist.

12. Halterung nach Anspruch 11, bei der der zweite Linear-Aktor (40) einerseits an der Lagerkonsole, vorzugsweise an einem vertikal sich erstreckendem Kragarm (41) der Lagerkonsole (4) angelenkt ist, und andererseits im unteren Bereich des zweiten Doppelarms (34) angelenkt ist, vorzugsweise von dessen Konsolenlager (38) beabstandet angelenkt ist.

13. Halterung nach einem der Ansprüche 11 oder 12, bei der der erste und zweite Linear-Aktor (33, 40) in Bezug auf eine vertikale Ebene über Kreuz angeordnet sind.

14. Halterung nach Anspruch 13, bei der der erste und zweite Linear-Aktor (33, 40) als Hydraulikzylinder ausgebildet sind, deren Kolbenstangen und Zylinder jeweils wechselseitig gegenüberliegend und benachbart angeordnet sind.

15. Halterung nach einem der Ansprüche 11 bis 14, bei der das Parallelogrammgetriebe auslegerseitig einen Flansch in Form einer ersten Anbauplatte (45) aufweist, an welche unterschiedliche Ausleger oder Anbauten mit Hilfe einer an letzteren vorgesehen korrespondierenden Anbauplatte anschließbar sind.

16. Halterung nach Anspruch 15, bei der ein Ausleger (2) über einen Hubmast (6) mit dem Parallelogrammgetriebe verbunden ist, wobei Parallelogrammgetriebe und Hubmast korrespondierende Anbauplatten aufweisen.

17. Halterung nach Anspruch 16, bei der der Hubmast (6) auslegerseitig eine Anschlussplatte aufweist, die mit unterschiedlichen Auslegern oder Anbauten mit Hilfe einer an letzteren vorgesehen korrespondierenden Anschlussplatte verbindbar ist.

18. Halterung nach einem der Ansprüche 11 bis 17, bei der die Lagerkonsole (4) vorderseitig und/oder rückseitig je eine zweite Anbauplatte (46) aufweist, welche mit einer korrespondierenden Anbauplatte eines Fahrzeugs verbindbar ist.

19. Landwirtschaftliches Fahrzeug mit einer an einer Halterung nach einem der Ansprüche 1 bis 18 befestigten Pflanzenbearbeitungseinrichtung, vorzugsweise einer Blattschneideeinrichtung
